Europäisches Patentamt

European Patent Office

Office européen des brevets

(11) Publication number: **0 332 317**
**A2**

## (12) EUROPEAN PATENT APPLICATION

(21) Application number: 89301686.5

(22) Date of filing: 22.02.89

(51) Int. Cl.⁴: **G11B 33/14 , G01L 1/22 , G01P 15/12**

(30) Priority: 11.03.88 US 167072

(43) Date of publication of application:
13.09.89 Bulletin 89/37

(84) Designated Contracting States:
DE FR GB

(71) Applicant: MAGNETIC PERIPHERALS INC.
12501 Whitewater Drive
Minnetonka Minnesota 55343(US)

(72) Inventor: Genheimer, Stephen Reeves
10124 Birkenhead Court
Yukon Oklahoma 73099(US)
Inventor: Pottebaum, Kenneth Lee
321 Redbud
Yukon Oklahoma 73099(US)

(74) Representative: Caro, William Egerton et al
J. MILLER & CO. Lincoln House 296-302 High
Holborn
London WC1V 7JH(GB)

(54) Shock load detection device.

(57) A shock load detection device (30) mounted in a housing (12) of a computer disk drive unit (10) for measuring a mechanical shock imposed thereon and issuing a command signal to stop writing of a read/write head (26) should a predetermined force value be exceeded, includes a sensor (32) for detecting a mechanical shock load imposed thereon and generating an electrical charge proportional to the mechanical shock load. An amplifier (58, 60) is connected to the sensor (32) for producing a voltage signal proportional to the electrical charge received from the sensor. A comparator (64) is connected to the amplifier (58, 60) for measuring the voltage signal and comparing the voltage signal with a predetermined range of force values. A write-fault signal (56) is received from the comparator when the voltage signal received by the comparator falls within the predetermined range of force values for stopping the writing of the read/write head (26).

## SHOCK LOAD DETECTION DEVICE

This invention relates to shock load detection devices and more particularly, although not so restricted, to shock load detection devices for mounting on computer disk drive units for detecting mechanical shock load imposed thereon and issuing a write-fault signal to stop writing of read/write heads.

It is to be expected that a mechanical shock load can generate errors in the performance of a computer disk drive unit. If a mechanical shock load occurs during a read operation from a disk, the resulting read error causes an error from error detection circuitry. If the shock occurs during writing, standard circuitry now used for error detection must re-read the data written on the disk. Also, if a shock occurs, read/write heads can move off track, destroying written data.

Production disk drive units now detect mechanical shock by sensing when a servo head is driven off track. This sensing method is imperfect because the indication of a mechanical shock may come too late to prevent a write error. Further, the mechanical shock may cause a data head position error without any servo head position error being detected. Also, an off track error in the servo signal can occur for other reasons besides mechanical shock.

As disk drive storage units become more compact and therefore more susceptible to error caused by mechanical shock and vibration, customer specifications also become more stringent. Therefore, it becomes increasingly desirable to provide a shock load detection device for a computer disk drive unit used from storing and reading data.

US-A-3,304,787 discloses a three-dimensional accelerometer device using piezo-resistive materials. The accelerometer is mounted on a moving body to be measured. A common intersection either coincides with a point on or within the moving body and is positioned adjacent another point whereby acceleration or deceleration exerted on or adjacent the common intersection point can be measured either in magnitude or direction.

US-A-4,088,907 discloses the use of a piezo-electric acoustic emission device. The device is responsive both to compressional wave energy and to shear wave energy from any direction along an X-, Y- and Z-axis so that the source of the acoustic emission may be determined.

US-A-3,363,471, US-A-3,853,000, US-A-4,658,175, US-A-4,498,025, US-A-4,664,181 and US-A-3,137,834 disclose various types of transducers, accelerometers and measuring devices using piezo-electric crystals for measuring forces along three axial directions.

The present invention seeks to provide a shock load detection device for detecting shock load and vibration on a computer disk drive and measuring the force value of the shock, to issue a write-fault signal for stopping writing on a read/write head prior to any written data being destroyed on a disk should the read/write head be driven off track, and to read mechanical shock load imposed upon a housing of a computer disk drive unit along X-, Y- and Z-axes, so that any shock received thereon can be detected, measured and a write-fault signal generated should the shock load fall within a predetermined range of force values.

According to one aspect of the present invention there is provided a shock load detection device mounted in a housing of a computer disk drive unit for measuring a mechanical shock imposed thereon and issuing a command signal to stop writing of a read/write head should a predetermined force value be exceeded, the detection device being characterised by comprising: sensor means for detecting a mechanical shock load imposed thereon and generating an electrical charge proportional to the mechanical shock load; amplifier means connected to the sensor means for producing a voltage signal proportional to the electric charge received from the sensor means; and comparator means connected to the amplifier means for measuring the voltage signal and comparing the voltage signal within a predetermined range of force values, a write-fault signal, in operation, being received from the comparator means when the voltage signal received by the comparator means falls within the predetermined range of force values for stopping the writing of the read/write head.

A shock load detection device may be designed to fit in a disk drive housing of a computer disk drive and may be capable of detecting shock levels as low as 3 to 8 g's with a precision of one half g. A "g" is a measure of the acceleration of gravity.

The sensor means may comprise tri-axial orthogonal sensor for detecting a mechanical shock load imposed thereon along X-, Y- and Z-axes.

Preferably the amplifier means comprises a charge amplifier connected to the sensor means and a voltage amplifer connected to the charge amplifier.

The comparator means may comprise a positive comparator and a negative comparator, the positive and negative comparators being connected to the amplifier means for measuring both a positive and a negative voltage signal corresponding to a positive and a negative mechanical shock within the predetermined range of force values.

The shock load detection device may include a low pass filter connected between the amplifer means and the comparator means.

According to a further aspect of the present invention there is provided a shock load detection device mounted in a housing of a computer disk drive unit for measuring a mechanical shock imposed thereon and issuing a command signal to stop writing of a read/write head should a predetermined force value be exceeded, the shock load detection device being characterised by comprising: tri-axial orthogonal sensor means for detecting a mechanical shock load imposed thereon along X-, Y- and Z-axes, the sensor means having a X-electrical lead disposed along the X-axis, a Y-electrical lead disposed along the Y-axis, and a Z-electrical lead (52) disposed along the Z-axis; an X-amplifier, a Y-amplifier, and a Z-amplifier connected to the respective leads for producing a voltage signal proportional to the electrical charge received from the sensor means; and a X-comparator connected to the X-amplifier, a Y-comparator connected to the Y-amplifer, and a Z-comparator connected to the Z-amplifier, the comparators, in operation, measuring the voltage signal and comparing the voltage signal within a predetermined range of force values, an X-write fault signal, a Y-write fault signal and a Z-write fault signal being received from the X-, Y- and Z-comparators respectively when the voltage signals received from the comparators falls within a predetermined range of force values for stopping the writing of the read/write head.

In one embodiment each of the comparators includes both a positive comparator and a negative comparator, the positive and negative comparators being connected to the respective amplifiers for measuring both positive and negative signals corresponding to both a positive and a negative mechanical shock with a predetermined range of force values received on the sensor means.

The sensor means may comprise comprises a base, an X-piezo-electric crystal, a Y-piezo-electric crystal and a Z-piezo-electric crystal, the crystals being attached to the base and orthogonally disposed thereon, and a X-seismic mass, a Y-seismic mass and a Z-seismic mass attached to the respective crystals, the leads being connected to the respective seismic masses.

The invention is illustrated, merely by way of example, in the accompanying drawings, in which:-

Figure 1 is an exploded isometric view of a standard computer disk drive unit showing a shock load detection device according to the present invention mounted on a disk drive housing;

Figure 2 is an isometric view of a tri-axial sensor of the shock load detection device of Figure 1;

Figure 3 illustrates a block diagram of circuitry of the shock load detection device of Figure 1 used in measuring mechanical shock loads along the X-, Y- and Z-axes of the tri-axial sensor; and

Figure 4 illustrates a portion of the circuitry of Figure 3 connected to a X-lead of the tri-axial sensor of Figure 2.

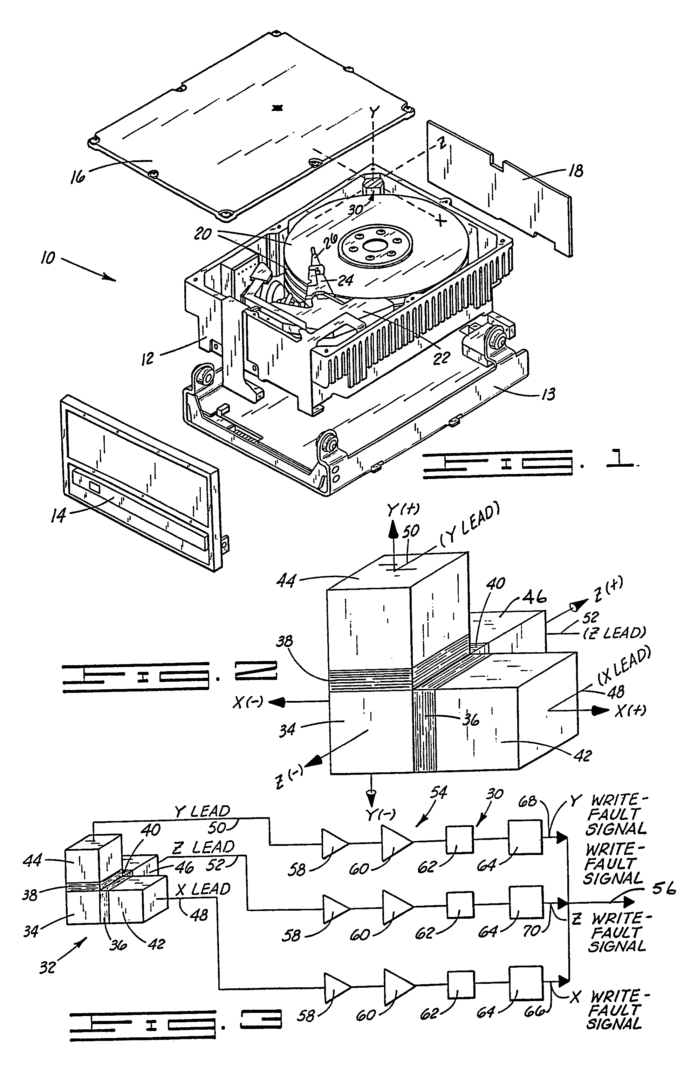

Figure 1 is an exploded isometric view of a standard computer disk drive unit designated by the general reference numeral 10. The computer disk drive unit 10 includes a disk drive housing 12 mounted on a housing carriage 13 along with a removable front panel 14, a top panel 16 and a rear panel 18. A plurality of rigid recording disks 20 are rotatably mounted in the housing 12 with the head disk assembly 22 mounted adjacent the disks 20. The head disk assembly 22 includes a spindle 24 with a plurality of read/write heads 26 attached thereto. While only one read/write head 26 is shown in Figure 1, it will be understood that there is a read/write head 26 for reading and writing data on both sides of each of the rigid disks 20. For clarity only the reading and writing of one read/write head 26 will be discussed, although the present invention applies to the reading and writing on all of the rigid disks 20 simultaneously. Also, while the use of a shock load detection device according to the present invention is discussed with the disk drive housing 12 having rigid disks 20 mounted therein, the detection device can also be used with floppy disks.

A shock load detection device according to the present invention is designated by the reference numeral 30 in Figure 1 and is mounted in one corner of the disk drive housing 12. The corner of the disk drive housing 12 is one place that there is sufficient room to accommodate the shock load detection device 30. Other locations would work equally well, such as attachment to the head disk assembly 22, if the necessary space is available. Also shown in dotted lines is a X-axis, a Y-axis and a Z-axis orthogonally disposed through the detection device 30. The three axes are shown to indicate that any mechanical shock or vibration placed on the disk drive unit 10 will be sensed and measured along one or more of these three axes, and a write-fault signal will be issued if the shock exceeds a predetermined g force value. If the write-fault signal occurs, writing by the read/write head 26 will be stopped prior to the read/write head being forced off track by the shock load and data being lost or destroyed.

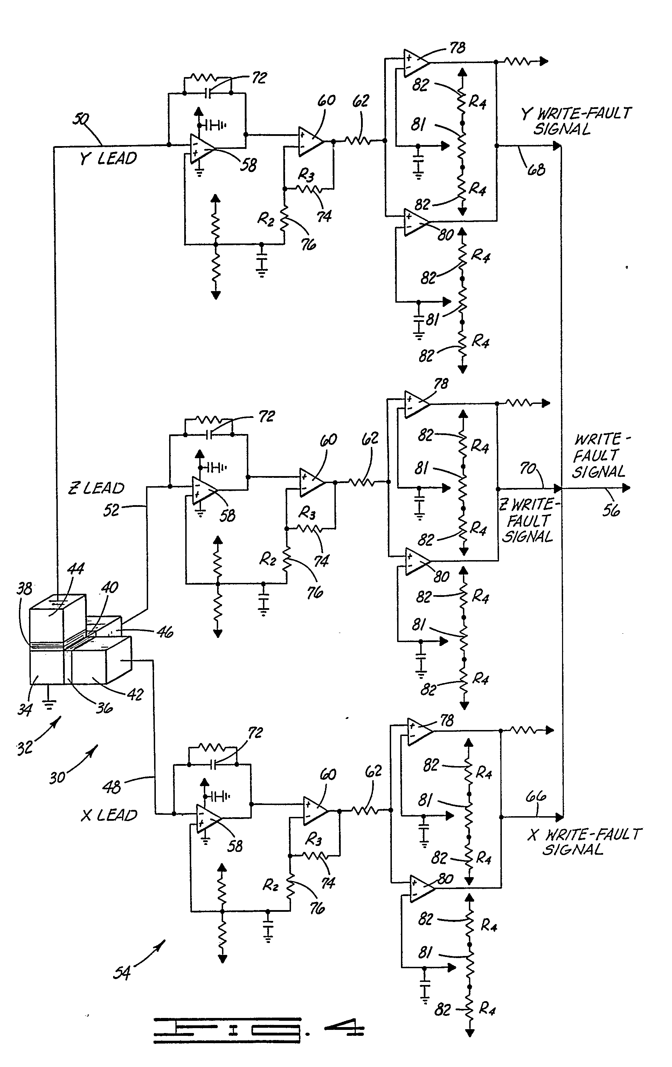

Figure 2 illustrates a tri-axial orthogonal sensor 32 of the shock load detection device 30. The tri-axial sensor 32 is the part of the detection device 30 used to detect a shock load imposed on the disk drive unit 10 and to generate an electrical charge proportional to the shock load. To generate the necessary charge a cubic base 34 is used with three piezo-electric crystals attached thereto. The crystals are designated as a X-piezo-electric crystal 36, a Y-piezo-electric crystal 38, and a Z-piezo-electric crystal 40. One surface of each crystal is attached to the cubic base 34 and perpendicular to its respective axis. The crystals are preferably made of a lead-zirconate-titanate ceramic material, a material chosen for its high charge/voltage output. The ceramic material is composed of a multiple of crystals which are polarised by a DC current.

Attached to the opposite surface of the crystals 36, 38, 40 is a X-seismic mass 42, a Y-seismic mass 44, and a Z-seismic mass 46, respectively. The cubic base 34 and the seimic masses 42, 44, 46 are secured to the crystals 36, 38, 40 using a conductive adhesive. An X-lead 48 is connected to the X-seismic mass 42 along the X-axis through the centre thereof for receiving both positive and negative charges along this axis. A Y-lead 50 and a Z-lead 52 are similarly connected to the Y- and Z-seismic masses 44, 46 respectively for receiving positive and negative charges along the Y- and Z-axes respectively.

When the piezo-electric crystals 36, 38, 40 are compressed or stretched due to a shock load or vibration, a charge appears on the polarised surfaces thereof. The charge is greatest when the compressive or tension force is parallel to either the X-, Y- or Z-axis and through the polarised surface of the crystal. The compressive force along each axis can be used to signal a positive charge, while the tension force placed on the crystals can be used to signal a negative charge. The electric charge is proportional to the force placed on each crystal and not the stress thereon. Each of the crystals responds as a capacitor with a potential difference generated across the polarised surfaces.

The charge generated by each crystal 36, 38, 40 is found from the following equation:

(1)     $g = dF$,

where $g$ = charge, $d$ = piezo-electric constant and $F$ = force on the crystal. The value of $d$ for a lead-zirconate-titanate crystal material is approximately 260p Coulomb/Newton.

The voltage across the opposite surfaces of each crystal 36, 38, 40 is found from the following equation:-

(2)     $V = g/c$,

where $V$ = voltage, $g$ = charge on the crystal, and $c$ = the capacitance of the crystal.

The capacitance of each crystal 36, 38, 40 is a function of its geometry and is of the order of 1000 pFarad. Since capacitance is a function of size, a reduction in size of the crystal for a given mass will produce a higher voltage output. Therefore, the higher the force on the crystal, the higher the voltage.

The internal impedance of each crystal is relatively high and of the order of 10 + M ohms. Therefore, the charge will remain on the surface of the crystal for a considerable period of time when a constant force is placed thereon. However, when measuring voltage at the surface of each crystal, an erroneous reading is received if the impedance, as measured, is not kept sufficiently high due to leakage through the sensor of a small amount of charge on the crystal. For low frequency measurments in a range of 10/msecond shock loads, the input impedance must be kept above 10 M ohms to prevent undesirable leakage.

Figure 3 is a block diagram of an electrical circuit 54 of the shock load detection device. The circuit 54 is used to convert the charge received from the piezo-electric crystals 36, 38, 40 via respective leads 48, 50, 52 to a read/write fault signal 56. Each of the leads 48, 50, 52 is connected to identical circuit components which include a charge amplifier 58, a voltage amplifier 60, a low pass filter 62 and a comparator 64. From each of the comparators 64, an X-write-fault signal 66, a Y-write-fault signal 68 and a Z-write-fault signal 70 respectively issue. Any of the write-fault signals 66, 68, 70, when in a predetermined range for measuring the "g" force value of the disk drive unit 10, can institute the overall write-fault signal 56 to stop the writing of the read/write head 26. The electrical circuit 54 is designed to meet high impedance requirements received from the electric charges of the sensor 32 as well as minute charges generated by shock loads as low as 3 g.

Referring now to Figure 4, the way in which the electrical circuit 54 is connected to the sensor 32 is shown in greater detail. In this Figure only the components connected to the X-lead 48 are shown. The components connected to the Y-lead 50 and the Z-lead 52 are similar to those connected to the X-lead 48 for generating a Y-write-fault signal 68 and a Z-write fault signal 70.

The charge amplifer 58 connected to the X-lead 48 produces a voltage signal proportional to the charge received from the surface of the X-piezo-electric crystal 36 and through the X-seismic mass 42. The gain is set by adjusting the feedback capacitance of a capacitor 72 connected to the charge amplifier 58. For the piezo-electric crystals used in the sensor 32 the optimum capacitance lays between 500 pF and 1000 pF with 820 pF used in the electrical circuit 54. The gain received from the charge amplifier 58 is approximately 1. The output of the charge amplifier rides at 1/2 Vcc.

The voltage amplifier 60, connected to the charge amplifier 58, is set by adjusting the ratio between a feedback resistor 74 (R3) to another resistor 76 (R2). The two resistors 74, 76 are both connected to the voltage amplifier 60 as shown. For the electrical circuit 54 a gain of 50 is used. The output of the voltage amplifier 60 also rides at 1/2 Vcc with the amplitude changing by approximately 250 mV per g received on the surface of the X-piezo-electric crystal 36.

The low pass filter 62 connected to the voltage amplifier 60 is set at 3000 Hz. The value of 3000 Hz is chosen by viewing the phase change of a charge amplifier system for different frequencies. The source for an analysis of the charge amplifier system can be found in a publication by Bryel and Kjar entitled "Piezo-electric Accelerometers and Vibration Preamplifiers". It has been determined that in the electrical circuit 54 there is no appreciable phase change between a 3000 Hz filter and using no filter in the electrical circuit.

The comparator 64 is made up of a positive comparator 78 and a negative comparator 80 connected to the low pass filter 62. The positive comparator 78 is set for a level above 1/2 Vcc for positive shock loads and the negative comparator 80 is set for a level below 1/2 Vcc for negative shock loads. The two comparators 78, 80 are set by adjusting two 10 K ohm potentiometers 81 to a desired level. In the electrical circuit 54 if Vcc is not kept constant, the levels of the comparators 78, 80 will change. The range of the comparators 78, 80 can be increased by reducing the value of resistors 82 (R4) or the range can be decreased by increasing the value of the resistors 82. By using the above values with each component and Vcc set at 10 V, a trigger level for generating the write-fault signal 56 can be set up to approximately 12 g's.

The above described sensor 32 with the electrical circuit 54 provide a shock load detection device for mounting in a disk drive housing. The shock load detection device will stop writing of a read/write head prior to a shock load or vibration moving a read/write head off track heretofore causing data to be lost or destroyed.

## Claims

1. A shock load detection device (30) mounted in a housing (12) of a computer disk drive unit (10) for measuring a mechanical shock imposed thereon and issuing a command signal to stop writing of a read/write head (26) should a predetermined force value be exceeded, the detection device being characterised by comprising:
sensor means (32) for detecting a mechanical shock load imposed thereon and generating an electrical charge proportional to the mechanical shock load; amplifier means (58, 60) connected to the sensor means (32) for producing a voltage signal proportional to the electric charge received from the sensor means; and comparator means (64) connected to the amplifier means (58, 60) for measuring the voltage signal and comparing the voltage signal within a predetermined range of force values, a write-fault signal (56), in operation, being received from the comparator means when the voltage signal received by the comparator means (64) falls within the predetermined range of force values for stopping the writing of the read/write head (26).

2. A detection device as claimed in claim 1 characterised in that the sensor means (32) comprises a tri-axial orthogonal sensor for detecting a mechanical shock load imposed thereon along X-, Y- and Z-axes.

3. A detection device as claimed in claim 1 or 2 characterised in that the amplifier means comprises a charge amplifier (58) connected to the sensor means and a voltage amplifer (60) connected to the charge amplifier.

4. A detection device as claimed in any preceding claim characterised in that the comparator means (64) comprises a positive comparator (78) and a negative comparator (80), the positive and negative comparators (78, 80) being connected to the amplifier means (58, 60) for measuring both a positive and a negative voltage signal corresponding to a positive and a negative mechanical shock within the predetermined range of force values.

5. A detection device as claimed in any preceding claim characterised by including a low pass filter (62) connected between the amplifer means (58, 60) and the comparator means (64).

6. A shock load detection device (30) mounted in a housing (12) of a computer disk drive unit (10) for measuring a mechanical shock imposed thereon and issuing a command signal to stop writing of a read/write head (26) should a predetermined force value be exceeded, the shock load detection device being characterised by comprising: tri-axial orthogonal sensor means (32) for detecting a mechanical shock load imposed thereon along X-, Y- and Z-axes, the sensor means having a X-electrical lead (48) disposed along the X-axis, a Y-electrical lead (50) disposed along the Y-axis, and a Z-electrical lead (52) disposed along the Z-axis; an X-amplifier (58, 60), a Y-amplifier (58, 60), and a Z-amplifier (58, 60) connected to the respective leads (48, 50, 52) for producing a voltage signal proportional to the electrical charge received from the sensor means (32); and a X-comparator (64) connected to the X-amplifier (58, 60), a Y-comparator (64) connected to the Y-amplifer (58, 60), and a Z-comparator (64) connected to the Z-amplifier (58, 60), the comparators (64), in operation, measuring the voltage signal and comparing the voltage signal within a predetermined range of force values, an X-write-fault signal, a Y-write-fault signal and a Z-write-fault signal being received from the X-, Y- and Z- comparators (64) respectively when the voltage signals received from the comparators (64) falls within a predetermined range of force values for stopping the writing of the read/write head (26).

7. A detection device as claimed in claim 6 characterised in that each of the comparators includes both a positive comparator (78) and a negative comparator (80), the positive and negative comparators being connected to the respective amplifiers (58, 60) for measuring both positive and negative signals corresponding to both a positive and a negative mechanical shock with a predetermined range of force values received on the sensor means (32).

8. A detection device as claimed in claim 6 or 7 characterised in that the sensor means (32) comprises a base (34), an X-piezo-electric crystal (36), a Y-piezo-electric crystal (38) and a Z-piezo-electric crystal (40), the crystals being attached to the base and orthogonally disposed thereon, and a X-seismic mass (42), a Y-seismic mass (44) and a Z-seismic mass (46) attached to the respective crystals, the leads (48, 50, 52) being connected to the respective seismic masses.

FIG. 1

FIG. 2

FIG. 3

FIG. 4